# EUROPÄISCHE PATENTSCHRIFT

(11) **EP 0 947 136 B1**
(45) Veröffentlichungstag und Bekanntmachung des Hinweises auf die Patenterteilung: **28.08.2002**
(21) Anmeldenummer: 99105823.1
(22) Anmeldetag: 23.03.1999
(51) Int. Cl.: A21C 3/02

(54) **Vorrichtung zum Walzen eines Teigstrangs**
Apparatus for rolling a strand of dough
Dispositif pour rouler une bande de pâte

(30) Priorität: 01.04.1998 DE 19814580
(43) Veröffentlichungstag der Anmeldung: 06.10.1999
(73) Patentinhaber: Weiss, Geerd, 75031 Eppingen-Richen (DE)
(72) Erfinder: Weiss, Geerd, 75031 Eppingen-Richen (DE)
(74) Vertreter: Katscher, Helmut, Dipl.-Ing.

(56) Entgegenhaltungen:
- EP-A- 0 179 645
- EP-A- 0 740 902
- DE-C- 3 844 441
- DE-U- 29 502 209
- NL-A- 7 714 214

## Beschreibung

Die Erfindung betrifft eine Vorrichtung zum Walzen eines auf einer Fördereinrichtung zugeführten Teigstrangs zwischen einer Förderwalze und mehreren Satellitenwalzen, die drehbar in seitlichen, um eine zentrale Achse drehbaren und angetriebenen Lagerträgern gelagert sind.

Derartige Vorrichtungen dienen dazu, aus einem auf einer Fördereinrichtung, beispielsweise einem Förderband herangeförderten Teigstrang ein Teigband zu walzen, das in nachfolgenden Bearbeitungseinrichtungen zur Bildung von einzelnen Teiglingen in Längsrichtung und Querrichtung zerschnitten werden kann. Eine besondere Schwierigkeit besteht darin, dass verhältnismäßig dicke Teigstränge in einem einzigen Walzvorgang auf eine verhältnismäßig geringe Teigdicke ausgewalzt werden müssen.

Hierfür sind in unterschiedlichen Ausführungsformen sogenannte "Satellitenkopfmaschinen" bekannt, bei denen mehrere, jeweils einzeln drehbar gelagerte und um eine gemeinsame zentrale Achse umlaufende Satellitenwalzen auf den Teigstrang einwirken. Bei diesen bekannten Vorrichtungen (beispielsweise DE 295 02 209 U) sind die Satellitenwalzen und die Förderwalze so breit ausgeführt, dass sich der Teigstrang seitlich nicht bis zu den Walzenenden erstreckt. Damit wird erreicht, dass die Seitenränder des Teigstrangs nicht mit den umlaufenden Lagerträgern der Satellitenwalzen kollidieren. Da die Seitenränder des Teigstrangs hierbei nicht geführt und nicht geformt werden, sind die aus diesen Seitenrändern geschnittenen Teiglinge teilweise unzureichend geformt. Insbesondere ist es erforderlich, den Teigstrang sorgfältig von Hand in die Fördereinrichtung einzulegen, um Verarbeitungsprobleme zu vermeiden.

Aufgabe der Erfindung ist es daher, eine Vorrichtung der eingangs genannten Art so auszubilden, dass mit dem Walzvorgang ein seitlich glatt begrenztes Teigband erzielt wird, bei dem auch aus den Seitenrändern Teiglinge der gewünschten Qualität hergestellt werden können.

Diese Aufgabe wird erfindungsgemäß dadurch gelöst, dass der Mantel jeder Satellitenwalze mindestens im Bereich der Berührung mit dem Teig bündig und dicht bis zu den Innenflächen von beiderseits angeordneten Seitenwangen reicht.

Der mindestens im Arbeitsbereich der Satellitenwalzen bündige und dichte Anschluss der Enden der Satellitenwalzen an die Seitenwangen, ermöglicht es, den Teigstrang bis zu den teigseitigen Innenflächen der Seitenwangen auszudehnen und dort zu führen. Dadurch erhält das erzeugte Teigband glatte, gerade Seitenränder, ohne dass die Teigseitenwände des Teigstrangs dazu beschnitten werden müssen. Das Eindringen von Teig in die Lagerung der Satellitenwalzen wird verhindert.

Gemäß einer bevorzugten Ausführungsform der Erfindung ist vorgesehen, dass die Seitenwangen jeweils eine dem drehbaren Lagerträger zugewandte, konzentrisch zu dessen Drehachse verlaufende, kreisbogenförmige Begrenzungskante aufweisen, die den Rand der Satellitenwalzen überdeckt.

Damit wird erreicht, dass die Satellitenwalzen ausreichend tief zwischen die Innenseiten der Seitenwangen ragen, dass der sich drehende Lagerträger gleichwohl aber nicht mit den Seitenwangen kollidiert.

Vorzugsweise sind die Lagerträger als geschlossene Kreisscheiben ausgeführt, die dicht und teigseitig bündig an den kreisbogenförmigen Begrenzungskanten der Seitenwangen angeordnet sind.

Gemäß einer weiteren Ausführungsform der Erfindung ist vorgesehen, dass die Kreisscheiben dicht und teigseitig bündig in kreisförmigen Öffnungen der Seitenwangen drehbar angeordnet sind und dass der Mantel jeder Satellitenwalze bis zu den teigseitigen Flächen der Kreisscheiben und der Seitenwangen reicht.

Da die Innenflächen der Kreisscheiben und der Ränder der kreisförmigen Öffnungen, die die Seitenscheiben aufnehmen, bündig, d. h. in einer Ebene liegen, kann der Teigstrang dort unbehindert geführt werden.

Gemäß einer bevorzugten Ausführungsform der Erfindung ist vorgesehen, dass die Seitenwangen relativ zu der Förderwalze verstellbar sind. Dadurch läßt sich die Dicke des erzielten Teigbandes einstellen.

Diese Verstellmöglichkeit wird bevorzugt dadurch realisiert, dass die Seitenwangen jeweils entlang einer Dichtfuge relativ zu den Seitenwänden der zuführenden Fördereinrichtung verschiebbar sind, wobei die Seitenwangen teigseitig bündig an den Seitenwänden der zuführenden Fördereinrichtung anschließen. Damit wird die seitliche Führung des Teigstrangs mit der erwünschten Verstellmöglichkeit kombiniert.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist.

Es zeigt:
Fig. 1 eine vereinfachte Seitenansicht einer Vorrichtung zum Walzen eines Teigstrangs,
Fig. 2 einen vergrößerten Schnitt längs der Linie II-II in Fig. 1 und
Fig. 3 in einer Ansicht entsprechend der Fig. 1 eine abgewandelte Ausführungsform.

Der zu walzende Teigstrang wird auf einem Zuführband 1 herangefördert, dessen Förderbreite durch zwei gegenüberliegende Seitenwände 2 begrenzt ist. Das Zuführband 1 fördert den Teigstrang zu einer Förderwalze 3, über der sich eine Satellitenwalzenanordnung 4 befindet.

Drei Satellitenwalzen 5 sind mit den Enden ihrer Wellen 6 in zwei seitlichen geschlossenen Kreisscheiben 7 gelagert, die mit einer gemeinsamen zentralen Welle 8 verbunden sind.

Im Bereich der Satellitenwalzenanordnung 4 befinden sich zwei Seitenwangen 9, die sich bis in den Umfangsbereich der Förderwalze 3 erstrecken, über den der Teigstrang geführt wird. Die die Lagerscheiben der Satellitenwalzenanordnung 4 bildenden geschlossenen Kreisscheiben 7 sind dicht und teigseitig bündig in kreisförmigen Öffnungen 12 der Seitenwangen 9 angeordnet.

Die Seitenwangen 9 schließen teigseitig, d. h. mit ihren dem Teigstrang zugekehrten Innenseiten, entlang einer Dichtfuge 10 bündig an die Innenseiten der Seitenwände 2 des Zuführbandes 1 an. Entlang dieser Dichtfuge 10 sind die Seitenwangen 9 in senkrechter Richtung relativ zu dem Zuführband 1 und zu der Förderwalze 3 verstellbar. Auf diese Weise kann der Walzspalt 11 zwischen der Förderwalze 3 und der ihr jeweils gegenüberstehenden Satellitenwalze 5 verstellt werden, um die Dicke des erzeugten Teigbandes zu verändern.

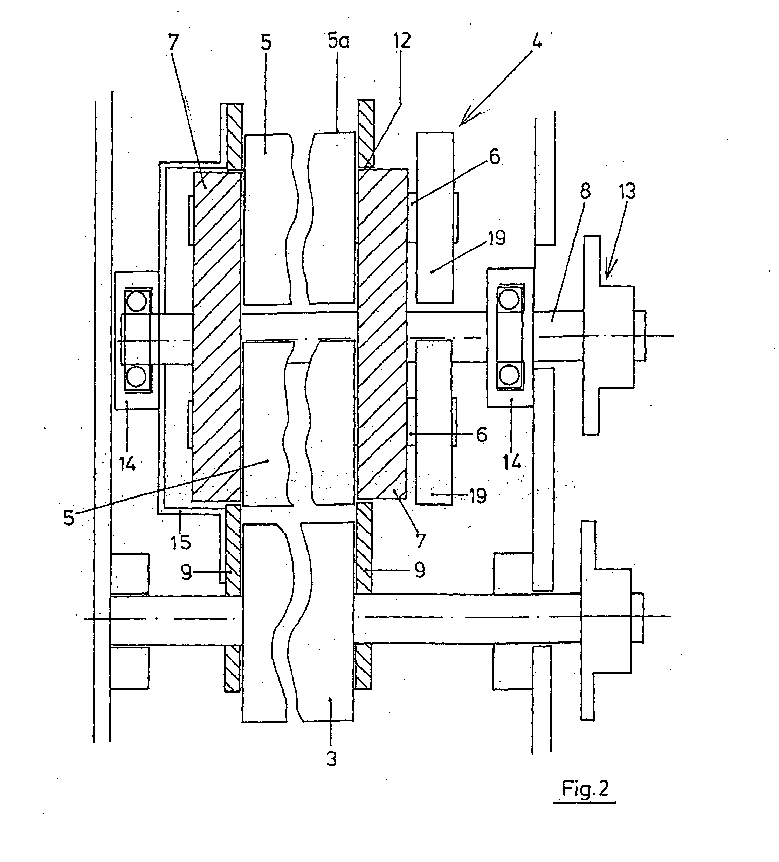

Die über eine in Fig. 2 nur angedeutete Antriebseinrichtung 13 antreibbare zentrale Welle 8, ist in Lager 14 gelagert, die jeweils über einen Halter 15 (der in Fig. 2 nur links dargestellt, rechts jedoch weggelassen ist) an den verstellbaren Seitenwangen 9 gelagert ist.

Wie man aus Fig. 2 erkennt, erstreckt sich jeweils der mit dem Teigstrang in Berührung kommende Mantel 5a jeder Satellitenwalze 5 seitlich bis zu den teigseitigen Innenflächen der Kreisscheiben 7 und der Seitenwangen 9.

Eine Messerwalze 16 ist unterhalb der Satellitenwalzenanordnung 4 angebracht und weist mehrere axial im Abstand zueinander angeordnete Kreismesser auf, die bis zur Umfangsfläche der Förderwalze 3 reichen und das aus dem Walzspalt 11 austretende Teigband in Längsstreifen verteilen, die auf ein Abförderband 17 gelangen und wegtransportiert werden. Eine Bürstenwalze 18 steht mit der Messerwalze 16 in Eingriff, um die Kreismesser zu säubern.

Ein nach unten ragender Abschnitt 9a jeder der beiden Seitenwangen 9 erstreckt sich bis in den Bereich zwischen der Förderwalze 3 und der damit zusammenwirkenden Messerwalze 16, so dass das Teigband auch noch im Schneidbereich seitlich geführt wird.

Jeweils das eine Ende jeder Welle 6 einer Satellitenwalze 5 erstreckt sich durch die Kreisscheibe 7 und trägt auf deren Außenseite jeweils eine Antriebsscheibe 19. Alle Antriebsscheiben 19 der Satellitenwalzen 5 können mit einer gemeinsamen (nicht dargestellten) Antriebseinrichtung in Eingriff stehen, beispielsweise einem Treibriemen, um die Satellitenwalzen 5 in der für den jeweiligen Walzvorgang gewünschten Weise anzutreiben oder beispielsweise abzubremsen.

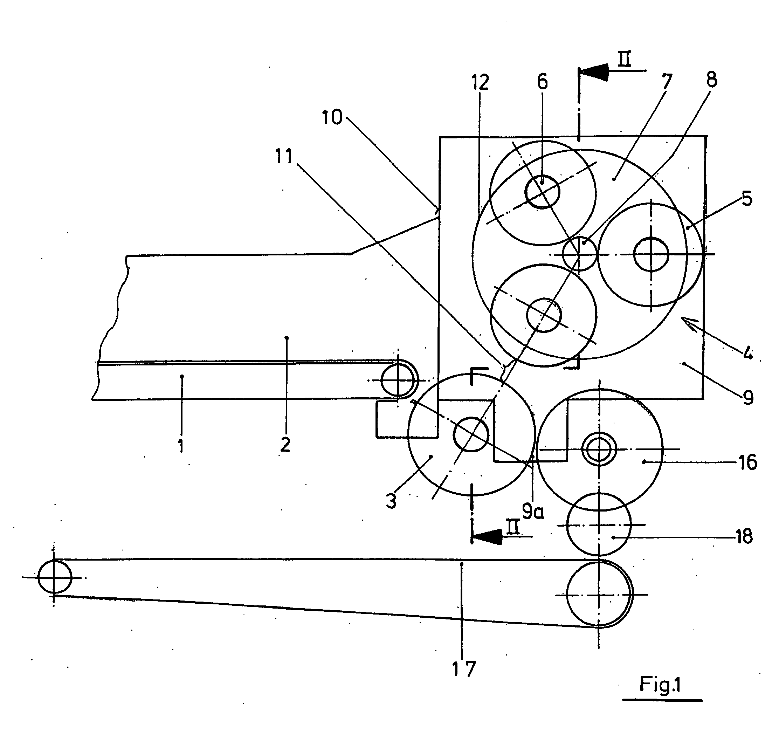

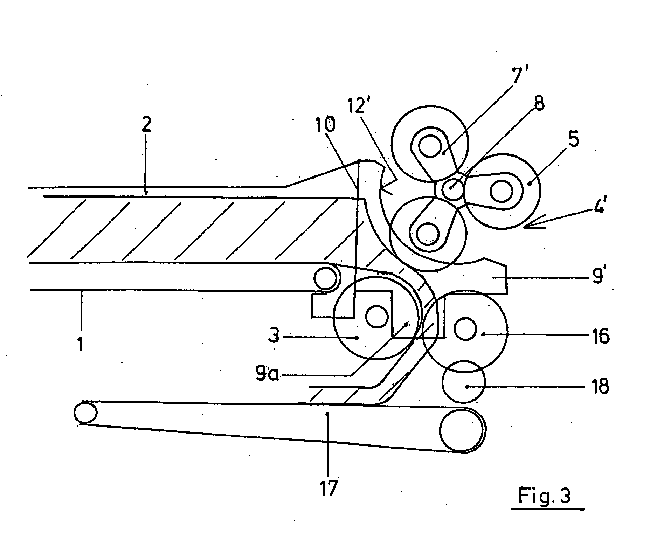

Die in Fig. 3 dargestellte Ausführungsform unterscheidet sich von der Ausführungsform nach den Fig. 1 und 2 im wesentlichen nur dadurch, dass die Satellitenwalzen 5 seitlich in sternförmigen Lagerträgern 7' gelagert sind. Die Seitenwangen 9' weisen jeweils eine dem drehbaren Lagerträger 7' zugewandte und konzentrisch zu dessen Drehachse verlaufende kreisbogenförmige Begrenzungskante 12' auf, die jeweils den Rand der Satellitenwalzen 5 in dem Bereich überdeckt, in dem die Satellitenwalzen 5 mit dem Teig in Berührung stehen. Der Radius der kreisbogenförmigen Begrenzungskanten 12' ist so gewählt, dass sich die Arme des sternförmigen Lagerträgers 7' frei drehen können.

## Patentansprüche

1. Vorrichtung zum Walzen eines Teigstrangs mit einer zuführenden Fördereinrichtung (1), mit einer Förderwalze (3) und mit mehreren Satellitenwalzen, (5), die drehbar in seitlichen, um eine zentrale Achse drehbaren und angetriebenen Lagerträgern (7') gelagert sind, **dadurch gekennzeichnet, dass** der Mantel (5a) jeder Satellitenwalze (5) mindestens im Bereich der Berührung mit dem Teig bündig und dicht bis zu den Innenflächen von beiderseits angeordneten Seitenwangen (9, 9') reicht.

2. Vorrichtung nach Anspruch 1, **dadurch gekennzeichnet, dass** die Seitenwangen (9') jeweils eine dem drehbaren Lagerträger (7') zugewandte, konzentrisch zu dessen Drehachse verlaufende kreisbogenförmige Begrenzungskante (12') aufweisen, die den Rand der Satellitenwalzen (5) überdeckt.

3. Vorrichtung nach Anspruch 2, **dadurch gekennzeichnet, dass** die Lagerträger als geschlossene Kreisscheiben (7) ausgeführt sind, die dicht und teigseitig bündig an den kreisbogenförmigen Begrenzungskanten (12') der Seitenwangen (9') angeordnet sind.

4. Vorrichtung nach Anspruch 1, **dadurch gekennzeichnet, dass** die Kreisscheiben (7) dicht und teigseitig bündig in kreisförmigen Öffnungen (12) der Seitenwangen (9) drehbar angeordnet sind und dass der Mantel (5a) jeder Satellitenwalze (5) bis zu den teigseitigen Flächen der Kreisscheiben (7) und der Seitenwangen (9) reicht.

5. Vorrichtung nach einem der Ansprüche 1 und 4, **dadurch gekennzeichnet, dass** die Seitenwangen (9, 9') relativ zu der Förderwalze (3) verstellbar sind.

6. Vorrichtung nach Anspruch 1 oder 5, **dadurch gekennzeichnet, dass** die Seitenwangen (9, 9') teigseitig bündig an Seitenwände (2) der zuführenden Fördereinrichtung (1) anschließen.

7. Vorrichtung nach Ansprüchen 5 und 6, **dadurch gekennzeichnet, dass** die Seitenwangen (9, 9') jeweils entlang einer Dichtfuge (10) relativ zu den Seitenwänden (2) der zuführenden Fördereinrichtung (1) verschiebbar sind.

8. Vorrichtung nach Anspruch 1, **dadurch gekennzeichnet, dass** sich die Seitenwangen (9, 9') bis in den Umfangsbereich der Förderwalze (3) erstrecken, über den der Teigstrang geführt wird.

9. Vorrichtung nach Anspruch 5, **dadurch gekennzeichnet, dass** die Vorrichtung eine mehrere Kreismesser aufweisende Messerwalze (16) aufweist, die mit der Förderwalze (3) zusammenwirkt und dass sich die Seitenwangen (9, 9', 9a) bis in den Bereich zwischen der Förderwalze (3) und der Messerwalze (16) erstrecken.

## Claims

1. Apparatus for rolling a strand of dough, having a feeding conveying arrangement (1), having a conveying roller (3) and having a plurality of satellite rollers (5), which are mounted rotatably in lateral bearing supports (7') which are driven and rotatable about a central axis, **characterized in that** the lateral surface (5a) of each satellite roller (5), at least in the region of contact with the dough, extends in a flush manner right up to the inner surfaces of side elements (9, 9') arranged on both sides.

2. Apparatus according to Claim 1, **characterized in that** the side elements (9') each have a circle-arc-shaped boundary edge (12') which is directed towards the rotatable bearing support (7'), runs concentrically in relation to the axis of rotation of the latter and covers over the border of the satellite rollers (5).

3. Apparatus according to Claim 2, **characterized in that** the bearing supports are configured as closed circular discs (7) which are arranged close up and, on the dough side, in a flush manner against the circle-arc-shaped boundary edges (12') of the side elements (9').

4. Apparatus according to Claim 1, **characterized in that** the circular discs (7) are arranged rotatably close up and, on the dough side, in a flush manner against circular openings (12) of the side elements (9), and **in that** the lateral surface (5a) of each satellite roller (5) extends up to the dough-side surfaces of the circular discs (7) and of the side elements (9).

5. Apparatus according to either of Claims 1 and 4, **characterized in that** the side elements (9, 9') can be adjusted relative to the conveying roller (3).

6. Apparatus according to Claim 1 or 5, **characterized in that** the side elements (9, 9') adjoin side walls (2) of the feeding conveying arrangement (1) in a flush manner on the dough side.

7. Apparatus according to Claims 5 and 6, **characterized in that** the side elements (9, 9') can each be displaced along a sealing joint (10) relative to the side walls (2) of the feeding conveying arrangement (1).

8. Apparatus according to Claim 1, **characterized in that** the side elements (9, 9') extend into the circumferential region of the conveying roller (3) over which the strand of dough is guided.

9. Apparatus according to Claim 5, **characterized in that** the apparatus has a cutter roller (16) which has a plurality of circular cutters and interacts with the conveying roller (3), and **in that** the side elements (9, 9', 9a) extend into the region between the conveying roller (3) and the cutter roller (16).

## Revendications

1. Dispositif pour rouler une bande de pâte comprenant un dispositif de transport d'acheminement (1), un rouleau de transport (3) et plusieurs rouleaux satellites (5), qui sont montés à rotation dans des supports de palier (7') latéraux moteurs, et pouvant tourner autour d'un axe central, **caractérisé en ce que** l'enveloppe (5a) de chaque rouleau satellite (5) se prolonge au moins dans la région de contact avec la pâte en affleurement et étroitement jusqu'aux faces internes de parois latérales (9, 9') disposées des deux côtés.

2. Dispositif selon la revendication 1, **caractérisé en ce que** les parois latérales (9') présentent à chaque fois une arête de limitation (12') en forme d'arc de cercle, tournée vers le support de palier rotatif (7') et s'étendant de manière concentrique à son axe de rotation, qui recouvre le bord des rouleaux satellites (5).

3. Dispositif selon la revendication 2, **caractérisé en ce que** les supports de palier sont réalisés sous forme de disques circulaires fermés (7), qui sont disposés étroitement et en affleurement côté pâte contre les arêtes de limitation (12') en forme d'arc de cercle des parois latérales (9').

4. Dispositif selon la revendication 1, **caractérisé en ce que** les disques circulaires (7) sont disposés à rotation étroitement et en affleurement côté pâte dans des ouvertures circulaires (12) des parois latérales (9), et que l'enveloppe (5a) de chaque rouleau satellite (5) se prolonge jusqu'aux faces côté pâte des disques circulaires (7) et des parois latérales (9).

5. Dispositif selon l'une quelconque des revendications 1 et 4, **caractérisé en ce que** les parois latérales (9, 9') sont réglables par rapport au rouleau de transport (3).

6. Dispositif selon la revendication 1 ou 5, **caractérisé en ce que** les parois latérales (9, 9') se raccordent côté pâte en affleurement contre les parois latérales (2) du dispositif de transport d'acheminement (1).

7. Dispositif selon les revendications 5 et 6, **caractérisé en ce que** les parois latérales (9, 9') sont déplaçables à chaque fois le long d'une ligne de joint (10) par rapport aux parois latérales (2) du dispositif de transport d'acheminement (1).

8. Dispositif selon la revendication 1, **caractérisé en ce que** les parois latérales (9, 9') s'étendent jusque dans la région périphérique du rouleau de transport (3), sur lequel la bande de pâte est guidée.

9. Dispositif selon la revendication 5, **caractérisé en ce que** le dispositif présente un rouleau de coupe (16) présentant plusieurs couteaux circulaires, lequel coopère avec le rouleau de transport (3) et **en ce que** les parois latérales (9, 9', 9a) se prolongent jusque dans la région entre le rouleau de transport (3) et le rouleau de coupe (16).
